**Europäisches Patentamt**

**European Patent Office**

**Office européen des brevets**

(19)

(11) Numéro de publication : **0 377 852 B1**

# (12) FASCICULE DE BREVET EUROPEEN

(45) Date de publication du fascicule du brevet :
**08.04.92 Bulletin 92/15**

(51) Int. Cl.⁵ : **B23Q 16/06**

(21) Numéro de dépôt : **89123130.0**

(22) Date de dépôt : **14.12.89**

(54) **Mécanisme d'indexage d'un élément rotatif de machine.**

(30) Priorité : **04.01.89 CH 15/89**

(43) Date de publication de la demande :
**18.07.90 Bulletin 90/29**

(45) Mention de la délivrance du brevet :
**08.04.92 Bulletin 92/15**

(84) Etats contractants désignés :
**AT DE FR IT**

(56) Documents cités :
**DE-A- 1 750 374**
**DE-A- 2 338 148**

(56) Documents cités :
**FR-A- 2 335 308**
**GB-A- 1 266 942**
**US-A- 2 356 097**
**US-A- 2 631 481**

(73) Titulaire : **IMOBERDORF A.G.**
**Werkhofstrasse 818**
**CH-4702 Oensingen (CH)**

(72) Inventeur : **Imoberdorf, Markus**
**Werkhofstrasse 5**
**CH-4702 Oensingen (CH)**

(74) Mandataire : **Robert, Jean S.**
**51, route du Prieur**
**CH-1257 Landecy (Genève) (CH)**

## Description

La présente invention a pour objet un appareil d'indexage comprenant un élément rotatif.

L'indexage d'éléments rotatifs de machines, notamment de tables porte-pièces de machines-outils, pose des problèmes dus au fait qu'il doit répondre à des exigences parfois contradictoires : il doit être à la fois rapide et précis et comporter des moyens efficaces de verrouillage, son mécanisme de commande devant être robuste, car souvent soumis à des forces d'inertie importantes, tout en étant si possible simple et en tout cas peu encombrant.

On a déjà proposé (cf. GB-A-1.266.942), pour répondre à ces exigences, un mécanisme d'indexage comprenant un organe rotatif d'entraînement, coaxial audit élément rotatif, entraîné en rotation pas à pas, un organe baladeur de liaison, interposé entre l'élément rotatif à indexer et ledit organe d'entraînement, cet organe de liaison étant à la fois mobile longitudinalement, le long de l'axe commun de l'élément rotatif à indexer et de son organe d'entraînement, et rotatif, étant solidaire angulairement de l'élément rotatif à indexer, et un organe de commande de l'organe baladeur de liaison fixe angulairement mais mobile longitudinalement, ledit organe baladeur de liaison étant monté rotativement par rapport audit organe de commande tout en étant solidaire axialement et, ledit organe de commande étant agencé pour approcher et éloigner l'organe baladeur de l'élément rotatif à indexer et l'amener alternativement d'une position dans laquelle cet organe baladeur n'est pas solidaire angulairement de l'organe d'entraînement dans une position dans laquelle, au contraire, ces deux organes sont en prise l'un avec l'autre, ce qui les solidarise angulairement, l'organe de commande de l'organe baladeur présentant des moyens d'interengagement avec l'élément rotatif à indexer de manière que, dans sa position longitudinale correspondant à celle dans laquelle l'organe de liaison est désolidarisé de l'organe d'entraînement, il verrouille, à l'aide desdits moyens d'interengagement, ledit élément rotatif à indexer, ledit organe de liaison étant constitué par un manchon monté rotativement et de façon coulissante sur un arbre coaxial à l'élément rotatif à indexer et à l'organe d'entraînement.

Le but de la présente invention est d'améliorer une telle disposition grâce à une solution constructive qui soit à la fois simple et robuste.

Ce but est atteint grâce aux moyens définis dans la revendication 1.

Le dessin représente, à titre d'exemple, une forme d'exécution de l'objet de l'invention.

La fig. 1 est une coupe axiale, passant par un plan vertical, d'un appareil d'indexage.

La fig. 2 est une coupe axiale, suivant un plan horizontal, de cet appareil représenté dans une position différente de ses organes mobiles.

La fig. 3 est une coupe suivant la ligne III-III de la fig. 2, à plus petite échelle.

La fig. 4 est une coupe suivant la ligne IV-IV de la fig. 1, à l'échelle de la fig. 3, et

La fig. 5 est une vue schématique du circuit hydraulique ou pneumatique de commande de l'appareil.

L'appareil représenté comprend un bâti formé de trois pièces 1, 2 et 3, assemblées les unes aux autres, sur la partie antérieure 1 duquel est montée rotativement une douille 4 constituant l'élément rotatif à indexer. La partie 2 du bâti porte une pièce 5, en forme de canon, traversée par un arbre 6 solidaire de l'élément 4.

Un organe d'entraînement constitué par un manchon 7 est monté rotativement sur l'arbre 6. Ce manchon présente un secteur denté 7a, servant à son entraînement, en prise avec une crémaillère 8a que présente une tige de commande 8 montée de façon coulissante dans la partie 2 du bâti.

L'appareil comprend en outre un organe de liaison 9 constitué par un manchon baladeur monté rotativement et de façon coulissante sur l'arbre 6 et qui est traversé, longitudinalement, par deux tiges 10, diamétralement opposées, chassées dans ledit manchon. Ces tiges 10 sont engagées de façon coulissante dans deux trous borgnes 11 ménagés dans l'élément à commander 4. Elles sont en outre agencées pour pénétrer dans une paire ou l'autre d'une série de perçages longitudinaux 12 que présente le manchon d'entraînement 7.

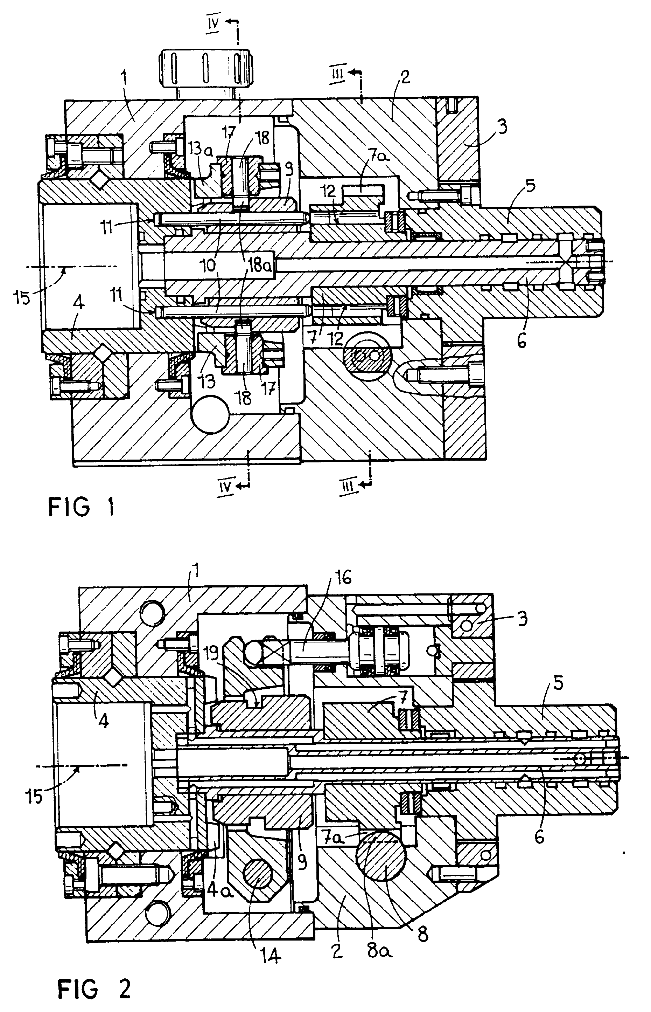

L'appareil comprend encore un organe de commande du manchon baladeur 9 constitué par une pièce annulaire 13 entourant avec jeu le manchon 9 et qui est articulée sur une tige 14 montée sur la partie 1 du bâti perpendiculairement à l'axe général du mécanisme, indiqué en 15 aux fig. 1 et 2. Cette pièce 13 peut donc osciller, commandée par une tige 16 coulissant dans la partie 2 du bâti. La pièce basculante 13 porte, montées sur elle par l'intermédiaire de canons 17, deux chevilles 18 se terminant chacune par une tête parallélépipédique 18a engagée dans une gorge annulaire 19 que présente le manchon baladeur 9. Enfin, la pièce basculante 13 présente des ergots 13a destinés à s'engager dans une denture de chant 4a que présente l'élément à indexer 4.

L'appareil décrit et représenté fonctionne de la façon suivante :

Lorsque la pièce basculante 13 et le manchon baladeur de liaison 9 se trouvent dans la position représentée au dessin, l'élément à indexer 4 est verrouillé angulairement en position par les ergots 13a engagés dans la denture 4a de l'élément 4. De plus, ce dernier n'est pas solidaire angulairement de l'organe d'entraînement que constitue le manchon 7 dès lors que les tiges 10 sont dégagées des perçages 12. Dans cette position, le manchon d'entraînement 7 peut tourner librement, sans entraîner l'élément 4, notamment effecter des mouvements de retour après avoir effectué des mouvements rotatifs positifs de commande de l'élément 4 comme décrit ci-après.

Lorsque la pièce annulaire 13 est amenée, sous l'action de la tige 16, dans la position représentée à la fig. 2, par basculement autour de son axe excentré 14, les ergots 13a, non visibles à la fig. 2, se dégagent de la denture 4a, ce qui libère l'élément à indexer 4; simultanément le manchon baladeur 9 est déplacé vers la droite des fig. 1 et 2 et les tiges 10 qu'il porte, quine sont pas visibles à la fig. 2, s'engagent alors dans deux des perçages 12 du manchon d'entraînement 7. Ce dernier est ainsi rendu solidaire angulairement de l'élément 4. Si ce dernier est alors entraîné en rotation par la tige à crémaillère 8, son mouvement rotatif se communique à l'élément 4 qui est ainsi indexé.

Il est à remarquer que l'ensemble est agencé de façon que les ergots 13a de la pièce annulaire basculante 13 ne se dégagent de la denture de chant 4a que lorsque les tiges 10 ont commencé de s'engager dans les perçages 12 de l'organe d'entraînement 7. Il en résulte, ce qui est de toute importance, que l'élément à indexer 4 n'est jamais libre en rotation mais est toujours soit verrouillé par les ergots 13a de la pièce basculante 13, laquelle est fixe en rotation, soit solidaire angulairement du manchon d'entraînement 7. Il n'y a ainsi aucun risque qu'un mouvement angulaire intempestif de l'élément 4 vienne à se produire.

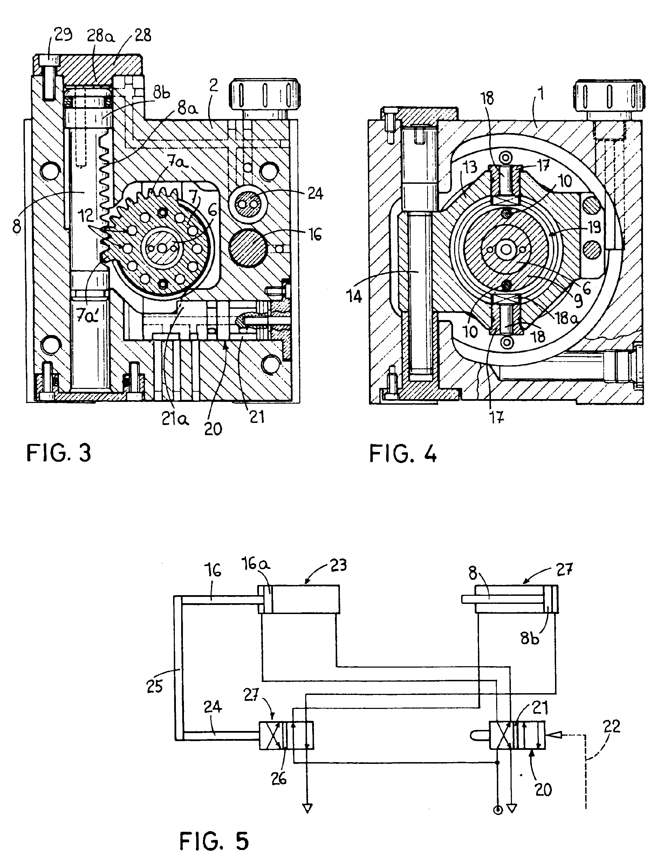

La commande de l'appareil est assurée par fluide, hydraulique ou pneumatique, grâce au dispositif représenté schématiquement à la fig. 5 :

Ce dispositif comprend un maître-cylindre 20 dont le piston, désigné par 21, visible à la fig. 3, est commandé par du fluide envoyé par courtes impulsions par une conduite indiquée schématiquement en 22 à la fig. 5. Lorsque des impulsions sont ainsi appliquées dans le maître-cylindre 20, le piston 21 est déplacé vers la gauche de la fig. 5, envoyant du fluide dans un cylindre 23 dans lequel se déplace un piston 16a solidaire de la tige 16 de commande de la pièce basculante 13.

Ce piston 16a est alors déplacé vers la droite (fig. 5), ce qui produit le mouvement basculant de la pièce 13, indiqué précédemment, faisant passer les organes du mécanisme de la position de repos ou de verrouillage de l'élément 4 représentée à la fig. 1 à leur position d'indexage représentée à la fig. 2.

La pièce basculante 13 est solidaire d'une tige 24, parallèle à la tige 16, qui se déplace en même temps qu'elle, cette liaison étant représentée schématiquement en 25 à la fig. 5. Cette tige 24 est solidaire d'un piston 26 se déplaçant dans un cylindre indiqué schématiquement en 27 à la fig. 5.

Le piston 26 commandé par la tige 24 se déplace vers la droite de la fig. 5 au cours du mouvement basculant de la pièce 13, envoyant ainsi du fluide dans un cylindre 27 dans lequel se déplace un piston 8b solidaire de la tige à crémaillère 8. Le fluide envoyé par le piston 26 dans le cylindre 27 déplace le piston 8b vers la gauche de cette figure, ce qui correspond, dans la réalité, à un déplacement de la tige 8 vers le bas. Ce mouvement de la tige 8 produit la rotation dans le sens contraire à celui des aiguilles d'une montre (fig. 3) de l'organe d'entraînement 7, assurant ainsi l'indexage de l'élément 4 comme mentionné précédemment.

A la fin de l'indexage, la première dent de la denture 7a du manchon d'entraînement 7, désignée par 7a', vient buter contre une partie en escalier 21a que présente la face antérieure du piston de commande 21, ce qui ramène ce dernier vers la droite (fig. 3 et 5), commandant ainsi le retour du piston 16a vers la gauche et, de ce fait, le basculement de la pièce annulaire basculante 13 pour la ramener dans la position représentée à la fig. 1.

L'appareil est agencé de manière à permettre des indexages de divisions (valeurs angulaires) différentes, par exemple 15°, 30°, 45°, 60° ou 90°, cette dernière division étant celle qui figure au dessin. Le passage d'une division d'indexage à une autre s'effectue en modifiant la course de la tige à crémaillère 8, ceci à l'aide d'un bouchon 28 (fig. 3) fixé à l'élément 2 du bâti par des vis 29 dont une seule est visible au dessin. On utilisera un jeu de bouchons 28 différents présentant chacun une partie 28a, contre laquelle vient buter le piston 8b, de longueur différente. Les tiges 10 pénétreront dans des paires différentes de perçages 12 de l'organe d'entraînement 7 selon la division d'indexage adoptée.

## Revendications

1. Mécanisme d'indexage d'un élément rotatif de machine (4) comprenant un organe rotatif d'entraînement (7), coaxial audit élément rotatif (4), entraîné en rotation pas à pas, un organe baladeur de liaison (9), interposé entre l'élément rotatif à indexer (4) et ledit organe d'entrainement (7), cet organe de liaison (9) étant à la fois mobile longitudinalement, le long de l'axe commun (15) de l'élément rotatif à indexer (4) et de son organe d'entraînement (7), et rotatif, étant solidaire angulairement de l'élément rotatif à indexer (4), et un organe de commande (13) de l'organe baladeur de liaison (9), fixe angulairement mais mobile longitudinalement, ledit organe baladeur de liaison (9) étant monté rotativement par rapport audit organe de commande (13) tout en étant solidaire axialement et, ledit organe de commande (13) étant agencé pour approcher et éloigner l'organe baladeur (9) de l'élément rotatif à indexer (4) et l'amener alternativement d'une position dans laquelle cet organe baladeur (9) n'est pas solidaire angulairement de l'organe d'entraînement (7) dans une position dans laquelle, au contraire, ces deux organes (7 et 9) sont en prise l'un avec l'autre, ce qui les solidarise angulairement, l'organe de commande (13) de l'organe baladeur (9) présentant des moyens d'interengagement (13a-4a) avec l'élément rotatif à indexer (4) de manière que, dans sa position longitudinale correspondant à celle dans laquelle l'organe de liaison (9) est désolidarisé de l'organe d'entrainement (7), il verrouille, à l'aide desdits moyens d'interengagement (13a-4a), ledit élément rotatif à indexer (4), ledit organe de liaison (9) étant constitué par un manchon (9) monté rotativement et de façon coulissante sur un arbre (6) coaxial à l'élément rotatif à indexer (4) et à l'organe d'entraînement (7), caractérisé par le fait que le manchon (9) porte au moins une tige (10) parallèle à son axe, qui se déplace axialement avec lui, qui est engagé en permanence dans un perçage (11) de l'élément rotatif à indexer (4), parallèle à l'axe de celui-ci, dans lequel elle est montée de façon coulissante, et qui s'engage, lorsque l'organe de liaison (9) est approché de l'organe d'entraînement (7), dans l'un ou l'autre de plusieurs perçages longitudinaux (12) que présente ce dernier.

2. Mécanisme d'indexage suivant la revendication 1, caractérisé par le fait que l'organe d'entrainement (7) est constitué par un manchon (7) présentant un secteur denté (7a) avec lequel est en prise une crémaillère (8-8a) de commande agencée de façon à effectuer des mouvements de va-et-vient au cours desquels elle fait tourner ledit organe d'entraînement (7) alternativement dans un sens et dans l'autre, en un mouvement oscillant, l'agencement étant tel que les mouvements rotatifs positifs de l'organe d'entrainement (7) s'effectuent lorsqu'il est en prise avec l'organe de liaison (9), et est ainsi solidaire angulairement de l'élément rotatif à indexer (4), alors que ses mouvements de retour s'effectuent lorsqu'il est désolidarisé de l'organe de liaison (9) et, par conséquent, également de l'élément rotatif à indexer (4).

3. Mécanisme d'indexage suivant la revendication 1, caractérisé par le fait que l'organe de commande (13) de l'organe baladeur de liaison (9) est constitué par une pièce annulaire (13) articulée sur le bâti du mécanisme autour d'un axe décentré (14), perpendiculaire à l'axe (15) de l'élément rotatif à indexer (4), cette pièce annulaire (13) entourant avec jeu l'organe baladeur (9) et portant deux chevilles (18) diamétralement opposées, se faisant face, engagées dans une gorge annulaire (19) que présente ledit organe baladeur (9) de manière que les mouvements oscillants de ladite pièce annulaire (13) produisent des déplacements longitudinaux dudit organe baladeur de liaison (9).

4. Mécanisme d'indexage suivant la revendication 3, caractérisé par le fait que ladite pièce annulaire (13) présente au moins un ergot (13a) s'engageant, lorsqu'elle se déplace en direction de sa position dans laquelle l'organe baladeur de liaison (9) est désolidarisé de l'organe d'entrainement (7), dans une denture de chant (4a) que présente l'élément rotatif à indexer (4) afin de verrouiller ce dernier angulairement, l'agencement étant tel que l'engagement dudit ergot (13a) dans ladite denture de chant (4a) s'effectue avant que la liaison angulaire entre l'organe d'entraînement (7) et l'organe de liaison (9) soit interrompue, et réciproquement, de manière que l'élément rotatif à indexer (4) soit en permanence soumis à l'action soit de l'organe d'entraînement (7), qui l'entraîne ou le maintient en position par l'intermédiaire de l'organe de liaison (9), soit de la pièce annulaire (13) de commande de l'organe baladeur (9) qui le verrouille.

## Claims

1. Indexing mechanism for a rotating machine element (4) comprising a driving rotating member (7) coaxial to said rotating element (4), driven rotatably, step by step, a connecting sliding member (9) interposed between the rotating element to be indexed (4) and the said driving member (7), this connecting member (9) being at the same time longitudinally movable, along the common axis (15) of the rotating element to be indexed (4) and of its driving member (7), and rotatable, being angularly rigid with the rotating element to be indexed (4), and a control member (13) of the connecting sliding member (9), angularly stationary but longitudinally movable, the said connecting sliding member (9) being rotatably mounted with respect to the said control member (13) while being rigid therewith axially and, the said control member (13) being arranged in such a way as to bring nearer or move away the sliding member (9) from the rotating element to be indexed (4) and to bring it alternatively from one position in which this sliding member (9) is not angularly rigid with the driving member (7) into a position in which, on the contrary, these two members (7 and 9) are meshing one with another, that renders them rigid angularly one with another, the control member (13) of the sliding member (9) presenting interengagement means (13a-4a) with the rotating element to be indexed (4) so that, in its longitudinal position corresponding to the one in which the connecting member (9) is not rigid with the driving member (7), it locks, by means of the said interengaging means (13a-4a), the said rotating element to be indexed (4), the said connecting member (9) being constituted by a sleeve (9) rotatably and slidably mounted on a shaft (6) coaxial with the rotating element to be indexed (4) and with the driving member (7), characterized by the fact that the sleeve (9) carries at least a stem (10) parallel to its axis, which moves axially therewith, which is permanently engaged in a hole (11) of the rotating element to be indexed (4), parallel to the axis thereof, in which it is slidably mounted, and which engages, when the connecting member (9) is brought nearer from the driving member (7) into one or the other of several longitudinal holes (12) provided in the latter.

2. Indexing mechanism as claimed in claim 1, characterized by the fact that the driving member (7) is constituted by a sleeve (7) presenting a toothed sector (7a) with which is meshing a driving rack (8-8a) arranged in such a way as to effect go and back movements during which it rotates the said driving member (7) alternatively in one sense and in the other one, in an oscillating movement, the arrangement being such that the positive rotating movements of the driving member (7) are effected when it is meshing with the connecting member (9) and thus is angularly rigid with the rotating element to be indexed (4), while its back movements are effected when it is no more rigid neither with the connecting member (9) nor, consequently, with the rotating element to be indexed (4).

3. Indexing mechanism as claimed in claim 1, characterized by the fact that the control member (13) of the connecting sliding member (9) is constituted by an annular member (13) articulated on the frame of the mechanism around an eccentric axis (14), perpendicular to the axis (15) of the rotating element to be indexed (4), this annular member (13) surrounding with play the sliding member (9) and carrying two studs (13) diametrically opposed, situated face to face, engaged in an annular groove (19) of the sliding member (9) in such a way that the oscillating movements of the said annular member (13) produce longitudinal displacements of the said connecting sliding member (9).

4. Indexing mechanism as claimed in claim 3, characterized by the fact that the said annular member (13) is provided with at least one catch (13a) engaging, when it moves in the direction of its position in which the connecting sliding member (9) is not rigid with the driving member (7), an edgewise toothing (4a) of the rotating element to be indexed (4) so as to lock the latter angularly, the arrangement being such that the engagement of the said catch (13a) in the said edgewise toothing (4a) is effected before the angular connection between the driving member (7) and the connecting member (9) is released, and reciprocally, in such a way that the rotating element to be indexed (4) be permanently submitted to the action either of the driving member (7), which drives it or maintains it in position through the intermediary of the connecting member (9), or of the driving annular member (13) of the sliding member (9) which locks it.

**Patentansprüche**

1. Teilmechanismus für ein verdrehbares Maschinen-element (4), umfassend ein verdrehbares Antriebsorgan (7) koaxial zum Drehelement (4), das schrittweise verdreht wird, mit einem zwischen dem zu verstellenden rotierbaren Element (4) und dem Antriebsorgan (7) angeordneten Verbindungsschieber (9), wobei dieses Verbindungsorgan (9) gleichzeitig entlang der gemeinsamen Achse (15) des zu verdrehenden Drehelementes (4) und seines Antriebsorganes (7) längsverschieblich und verdrehbar ist und drehwinkelfest mit dem zu verdrehenden Drehelement (4) verbunden ist, mit einem Betätigungsorgan (13) für das verschiebliche Verbindungsorgan (9), das drehfest, aber längsverschieblich angeordnet ist, wobei das verschiebliche Verbindungsorgan (9) bezüglich des Betätigungsorganes (13) verdrehbar, aber axial mit ihm verbunden ist, und wobei das Betätigungsorgan (13) betätigt wird, um das Schiebeorgan (9) dem zu verstellenden Drehelement (4) anzunähern oder von ihm zu entfernen und es so von einer Position, in der das Schiebeorgan (9) nicht drehfest mit dem Antriebsorgan (7) verbunden ist, abwechselnd in eine Position zu bringen, in der im Gegensatz dazu diese beiden Organe (7 und 9) miteinander verbunden sind, was sie drehfest miteinander verbindet, wobei das Antriebsorgan (13) des Schiebers (9) Eingriffsmittel (13a-4a) für das zu verstellende Drehelement (4) so aufweist, daß in seiner Längsposition, die der entspricht, in der das Verbindungsorgan (9) vom Antriebsorgan (7) getrennt ist, mit Hilfe dieser Eingriffsmittel (13a-4a) das zu verstellende Drehelement (4) verriegelt, wobei das Verbindungselement (9) aus einer Hülle besteht, die verdrehbar und verschieblich auf einer Welle (6) koaxial mit dem zu verstellenden Drehelement (4) und dem Antriebselement (7) angebracht ist, dadurch gekennzeichnet, daß die Hülle (9) zumindest eine Stange (10) trägt, die parallel zur Achse der Hülle verläuft und sich mit ihr axial verschiebt und die dauernd in eine Öffnung (11) des zu verstellenden Drehelementes (4) ragt, wobei die Öffnung parallel zu dessen Achse verläuft und die Stange in der Öffnung verschieblich ist und daß sie sich, wenn das Verbindungsorgan (9) dem Antriebsorgan (7) angenähert ist, in eine von mehreren Längsöffnungen (12), die letzteres aufweist, eingreift.

2. Teilmechanismus nach Anspruch 1, dadurch gekennzeichnet, daß das Antriebsorgan (7) aus einer Hülle (7) besteht, die einen gezahnten Sektor (7a) aufweist, der in eine Antriebszahnstange (8, 8a) eingreift, so daß hin-und hergehende Bewegungen ausgeführt werden, während denen das Antriebsorgan (7) abwechselnd in der einen und der anderen Richtung verdreht wird und eine oszillierende Bewegung ausführt, wobei die Betätigung so erfolgt, daß die Bewegungen mit positiver Verdrehung des Antriebselementes ausgeführt werden, wenn es im Eingriff mit dem Verbindungselement (9) und daher drehfest gegenüber dem zu verstellenden Drehelement (4) ist, während die Rückholbewegungen ausgeführt werden, wenn es vom Verbindungsorgan (9) getrennt ist und somit auch vom zu verstellenden Drehelement (4).

3. Teilmechanismus nach Anspruch 1, dadurch gekennzeichnet, daß das Antriebsorgan (13) für das verschiebliche Verbindungsorgan (9) aus einem Ringteil (13) besteht, der am Gestell des Mechanismus um eine exzentrische Achse (14), die rechtwinkelig zur Achse (15) des zu verstellenden Drehelementes (4) verläuft, verschwenkbar ist, wobei der Ringteil (13) das Schiebeorgan (9) mit Spiel umgibt und zwei diametral gegenüberliegende Bolzen (18) trägt, die gegeneinander stehen und in eine Kreisnut (19) des Schiebeorganes (9) so eingreifen, daß die Schwenkbewegungen des Ringteiles (13) Längsverschiebungen des verschieblichen Verbindungsorganes (9) bewirken.

4. Teilmechanismus nach Anspruch 3, dadurch gekennzeichnet, daß der Ringteil (13) zumindest einen Vorsprung (13a) aufweist, der sich, wenn er in Richtung der Position verschoben ist, in der das verschiebliche Verbindungsorgan (9) vom Antriebsorgan (7) getrennt ist, in eine Zahnung der Stirnseite (4a) des zu verstellenden Drehelementes (4) eingreift, um dieses drehfest zu verriegeln, wobei die Betätigung so erfolgt, daß das Eingreifen des Vorsprunges (13a) in die Zahnung der Stirnseite (4a) erfolgt, bevor die Winkelverbindung zwischen dem Antriebsorgan (7) und dem Verbindungsorgan (9) getrennt wird und umgekehrt, sodaß das zu verstellende Drehelement (4) permanent der Wirkung entweder des Antriebsorganes (7), das es verstellt oder mittels des Verbindungsorganes (9) in seiner Lage hält oder des Ringteiles (13), der das Schiebeorgan (9) betätigt und es fixiert, unterliegt.

FIG 1

FIG 2

FIG. 3

FIG. 4

FIG. 5